(19) **Europäisches Patentamt / European Patent Office / Office européen des brevets**

(11) **EP 4 696 135 A1**

(12) **EUROPEAN PATENT APPLICATION**
published in accordance with Art. 153(4) EPC

(43) Date of publication:
**18.02.2026 Bulletin 2026/08**

(21) Application number: **23933151.5**

(22) Date of filing: **07.06.2023**

(51) International Patent Classification (IPC):
**A01M 29/10** (2011.01)   **A01N 43/40** (2006.01)
**A01N 59/00** (2006.01)   **C09D 5/14** (2006.01)
**C09D 7/61** (2018.01)   **C09D 7/63** (2018.01)
**C09D 7/45** (2018.01)   **A01M 29/12** (2011.01)

(52) Cooperative Patent Classification (CPC):
**A01M 29/10; A01M 29/12; A01N 43/40;**
**A01N 59/00; C09D 5/14; C09D 7/45; C09D 7/61;**
**C09D 7/63**

(86) International application number:
**PCT/KR2023/007745**

(87) International publication number:
**WO 2024/214864 (17.10.2024 Gazette 2024/42)**

(84) Designated Contracting States:
**AL AT BE BG CH CY CZ DE DK EE ES FI FR GB**
**GR HR HU IE IS IT LI LT LU MC ME MK MT NL**
**NO PL PT RO RS SE SI SK SM TR**
Designated Extension States:
**BA**
Designated Validation States:
**KH MA MD TN**

(30) Priority: **12.04.2023   KR 20230048431**
**24.05.2023   KR 20230066976**

(71) Applicant: **MTC Co., Ltd.**
**Gwacheon-si Gyeonggi-do 13807 (KR)**

(72) Inventors:
• **MOON, Gwi Yeol**
 **Gwacheon-si Gyeonggi-do 13830 (KR)**
• **PARK, Bong Sik**
 **Seoul 03628 (KR)**
• **PARK, Jun Sang**
 **Seoul 03646 (KR)**

(74) Representative: **Rau, Schneck & Hübner**
**Patentanwälte Rechtsanwälte PartGmbB**
**Königstraße 2**
**90402 Nürnberg (DE)**

(54) **ANTIMICROBIAL COMPOSITION AND PEST-PROOF ANTIMICROBIAL LIGHTING COMPRISING SAME**

(57) The present invention relates to a pest-proof and antimicrobial composition and a pest-proof lighting comprising same. Particularly, the present invention provides a pest-proof and antimicrobial composition, wherein a pest-proof and antimicrobial composition comprising metal powder, sea marine stone, nanocellulose, and ultrapure water is manufactured, and the pest-proof and antimicrobial composition is coated on an LED lamp having the color temperature of 2000K to 3000K and the wavelength band of 510 to 700 nm. Particularly, the present invention provides a pest-proof and antimicrobial composition, wherein a pest-proof and antimicrobial composition comprising metal powder, sea marine stone, nanocellulose, and ultrapure water is manufactured, and the pest-proof and antimicrobial composition is coated on an LED lamp having the color temperature of 2000 K to 3000 K and the wavelength band of 510 to 700 nm.

FIG. 1

**EP 4 696 135 A1**

**Description**

Technical Field

The present invention relates to an antimicrobial composition and a pest-proof and antimicrobial lighting including the same.

Background Art

In general, lighting apparatuses include various lighting apparatuses such as LED lights, fluorescent lights, incandescent lights or halogen lights, and are essentially installed in offices, homes, reading rooms, schools, hospitals, or industrial facilities, so as to be used for limited functions including illuminating the darkness, such as illuminating the interior. Among these lighting apparatuses, the LED lighting apparatuses are mainstream in terms of luminous efficiency and energy saving for efficient power use.

Meanwhile, when ventilation is insufficiently performed in indoor spaces, such as offices, reading rooms, study accommodations, or homes, installed with various lighting apparatuses including LED lighting apparatuses, indoor humidity increases to maintain a humid environment and causes bad odors and bacteria to breed, thereby threatening the health of residents. In modern society, in addition to bacteria, diseases such as sick building syndrome tend to prevalently occur due to volatile organic compounds such as formaldehyde, xylene, toluene, benzene, or acetone.

Further, a lot of bugs may be attracted to outdoor lighting in the summer, and pest-proof lightings may be used to prevent the bugs, however, may also have limitations. Accordingly, researches are needed on lightings that simultaneously have deodorizing properties and pest-proof effects.

Disclosure

Technical Problem

The present invention provides an air purification system easily installed and maintained to provide a lighting apparatus containing an antimicrobial composition having antimicrobial and antiviral effects and volatile organic compound-deodorizing and removing effects in a living space.

In addition, the present invention provides a lighting device capable of suppressing pests attracted to the light of the lighting device.

Technical Solution

The present invention provides an antimicrobial and pest-proof composition including metal powder, sea marine stone, nanocellulose, and water, wherein the metal powder includes one or more selected from gold, silver, titanium, copper, zinc, vanadium, iron, platinum, nickel, aluminum, magnesium, and calcium powder, and the sea marine stone includes 20 to 40 wt% of $SiO_2$, 10 to 25 wt% of $Al_2O_3$, 2 to 10 wt% of $SnO_2$, 2 to 10 wt% of $Fe_2O_3$, 0.1 to 2 wt% of $MgO$, 1 to 2 wt% of $K_2O$, 0.3 to 2 wt% of $Na_2O$, 20 to 40 wt% of $TiO_2$, 0.3 to 3 wt% of $ZnO$, 0.01 to 0.05 wt% of $MnO$, and 0.0005 to 0.005 wt% of $P_2O_5$.

According to one aspect of the present invention, the antimicrobial composition may include 40 to 60 parts by weight of sea marine stone, 1 to 10 parts by weight of metal powder, and 40 to 60 parts by weight of nanocellulose based on 100 parts by weight of the water.

According to one aspect of the present invention, the water may be ultrapure or distilled water.

According to one aspect of the present invention, the antimicrobial composition may further include picaridin.

According to one aspect of the present invention, the antimicrobial composition may further include 0.01 to 10 parts by weight of picaridin based on 100 parts by weight of the water.

According to one aspect of the present invention, the metal powder may have an average particle diameter of 1 nm to 200 nm.

According to one aspect of the present invention, the marine stone may have a powder form and have an average particle size of 1 nm to 200 nm.

According to one aspect of the present invention, the antimicrobial and pest-proof composition may be coated on an LED lighting to provide an antimicrobial and pest-proof lighting.

According to one aspect of the present invention, the LED lighting may have a color temperature range of 2,000 K to 6,000 K.

According to one aspect of the present invention, the LED lighting may have a color temperature range of 2,000 K to 3,000 K.

According to one aspect of the present invention, the LED lighting may emit a light wavelength obtained by removing a wavelength band of 300 nm to 500 nm. According to one aspect of the present invention, the LED lighting may emit a light wavelength of 510 nm to 700 nm.

According to one aspect of the present invention, the LED lamp may be any one selected from a bulb type, a street lamp, a solar street lamp, floodlight, a solar floodlight, a ceiling light, a downlight, a searchlight, a horizon light, a multi-light pendant, a stand light, a full light, a wall lamp, a kitchen lamp, a living room lamp, a flat edge lamp, a square light, a circular room lamp, a cross-line lamp, an I-line lamp, a square sensor lamp, a circular sensor lamp, a circular ceiling downlight, an oval ceiling downlight, an underground lamp, a parking lot lighting lamp, a compatible LED lamp, a PL fixture, a short type ball bulb, a long type ball bulb, a studio button lamp, a square button lamp, a cross lamp, a long stand lamp, a mood lamp, a factory lamp, a desk stand lamp, a slim surface lighting, a bathroom lamp, a sink lamp, a shoe rack lamp a flat slim bezel edge, a square floodlight, a traffic light, a sensor lamp, a ceiling downlight lamp, a recessed floodlight, a signboard lamp, a flat panel lighting, a surface lighting, a ship floodlight, a landscape lighting, a factory floodlight, a tunnel lamp, a waterproof surface lighting flat lamp, an emergency downlight, a gas station LED lighting, an emergency guide lamp, a light for high-temperature and high-humidity environments, an emergency flat lamp, a sports lighting, a floodlight and landscape lamp, a parking lot lamp, a moisture-proof lamp, a parking lamp, a security street lamp, a crosswalk floodlight, a street and garden lamp, a security lamp, a tree light and a car headlight.

Advantageous Effects

The antimicrobial composition according to the present invention has the deodorizing effect for volatile organic compounds generated from various building materials and the antimicrobial and antiviral effects in living spaces, so that quality air can be provided within the living spaces.

In addition, the LED lamp coated with the antimicrobial composition of the present invention is used, so that deodorizing effect can be implemented and the attraction of pests can be suppressed.

Description of Drawings

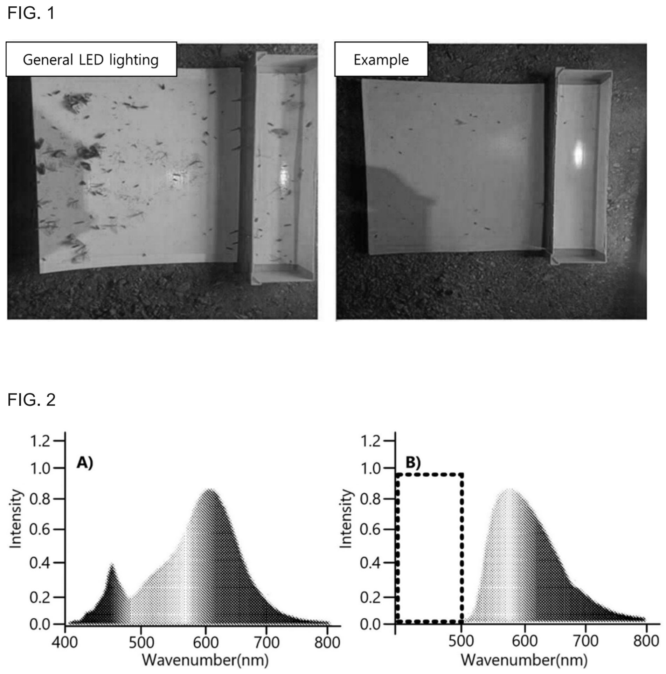

FIG. 1 shows images of pest attraction according to pest-proof antimicrobial lighting and general commercial LED lighting.

FIG. 2 shows image A of a wavelength band of the pest-proof antimicrobial lighting and image B of the general commercial LED lighting.

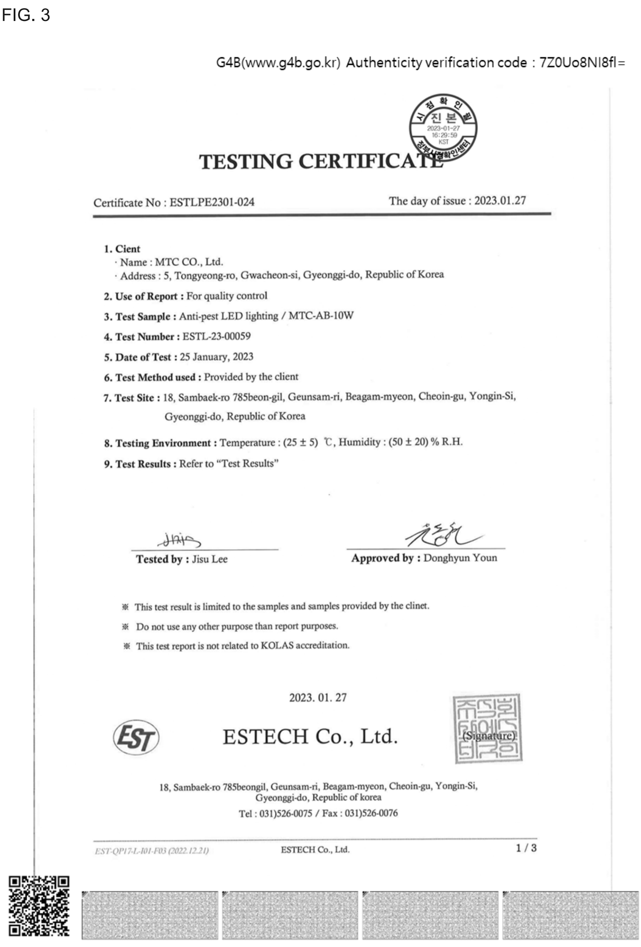

FIG. 3 is an image of a certificate on completely blocking blue light.

Best Mode

Mode for Invention

Hereinafter, the present invention will be described in more detail through the embodiments or the examples including the accompanying drawings. However, the following the embodiments or the examples are only the reference for describing the present invention in detail, and the present invention is not limited thereto and may be implemented in various forms.

In addition, unless otherwise defined, all technical and scientific terms have the same meaning as commonly understood by one of those having ordinary skill in the art. The term used in the description of the present invention is only for the purpose of effectively describing particular embodiments and is not intended to limit the present invention.

In addition, the singular forms used in the specification and the appended claims are intended to include the plural forms as well, unless the context clearly indicates otherwise.

In addition, when one component "includes" some elements, it does not exclude other elements, but may further include the other elements, unless particularly stated otherwise.

The present invention provides a pest-proof and antimicrobial composition including metal powder, sea marine stone, nanocellulose, and water, wherein the metal powder includes one or more selected from gold, silver, titanium, copper, zinc, vanadium, platinum, nickel, iron, aluminum, magnesium and calcium powder, and the sea marine stone includes 20 to 40 wt% of $SiO_2$, 10 to 25 wt% of $Al_2O_3$, 2 to 10 wt% of $SnO_2$, 2 to 10 wt% of $Fe_2O_3$, 0.1 to 2 wt% of MgO, 1 to 2 wt% of $K_2O$, 0.3 to 2 wt% of $Na_2O$, 20 to 40 wt% of $TiO_2$, 0.3 to 3 wt% of ZnO, 0.01 to 0.05 wt% of MnO, and 0.0005 to 0.005 wt% of $P_2O_5$.

The pest-proof and antimicrobial composition includes metal powder, marine stone, nanocellulose and water, thereby not only having antimicrobial and deodorizing effects, but also maximally inhibiting the access of pests when the antimicrobial composition is applied to wallpaper, lighting or the like, so that a comfortable living environment can be established.

The metal powder refers to powder including one or more selected from gold, silver, titanium, copper, zinc, vanadium, platinum, nickel, iron, aluminum, magnesium, and calcium. Specifically, the metal powder may be powder including one or more selected from gold, silver, titanium, copper, zinc, and magnesium. Specifically, the metal powder may be powder including one or more selected from silver, titanium, copper, and zinc. Specifically, the metal powder may be powder composed of silver, titanium, copper, and zinc.

In addition, the metal powder may be in the form of metal hydroxide or metal oxide, however, the present invention is not limited thereto.

The metal powder refers to a mixture of each metal powder, and for example, silver, titanium, copper, and zinc powder may be mixed in an equal content.

According to one aspect of the present invention, the metal powder may have an average particle size of 1 nm or more, 2 nm or more, 5 nm or more, 10 nm or more, or 20 nm or more; 200 nm or less, 150 nm or less, 100 nm or less, 50 nm or less, or 30 nm or less; 1 nm to 200 nm; 2 nm to 5 nm; 20 nm to 30 nm; or 50 nm to 150 nm, however, the present invention is not limited thereto.

The sea marine stone includes 20 to 40 wt% of $SiO_2$, 10 to 25 wt% of $Al_2O_3$, 2 to 10 wt% of $SnO_2$, 1 to 10 wt% of $Fe_2O_3$, 0.1 to 2 wt% of $MgO$, 1 to 3 wt% of $K_2O$, 0.3 to 2 wt% of $Na_2O$, 20 to 40 wt% of $TiO_2$, 0.3 to 3 wt% of $ZnO$, 0.01 to 0.05 wt% of $MnO$, and 0.0005 to 0.005 wt% of $P_2O_5$; and specifically, may include 30 to 40 wt% of $SiO_2$, 20 to 25 wt% of $Al_2O_3$, 7 to 10 wt% of $SnO_2$, 1.7 to 5 wt% of $Fe_2O_3$, 0.8 to 2 wt% of $MgO$, 1.5 to 2 wt% of $K_2O$, 1 to 2 wt% of $Na_2O$, 30 to 40 wt% of $TiO_2$, 1.5 to 3 wt% of $ZnO$, 0.03 to 0.05 wt% of $MnO$, and 0.001 to 0.003 wt% of $P_2O_5$, however, the present invention is not limited thereto.

According to one aspect of the present invention, the marine stone may have a powder form and have an average particle size of 1 nm or more, 2 nm or more, 5 nm or more, 10 nm or more, or 20 nm or more; 200 nm or less, 150 nm or less, 100 nm or less, 50 nm or less, or 30 nm or less; 1 nm to 200 nm; 2 nm to 5 nm; 10 nm to 30 nm; or 50 nm to 150 nm, however, the present invention is not limited thereto.

The nanocellulose may be cellulose nanofiber (CNF) or cellulose nanocrystal, however, the present invention is not limited thereto.

The cellulose nanofiber may have a diameter of 5 nm to 100 nm and a length of 300 nm to 100 $\mu$m, however, the present invention is not limited thereto. In addition, the cellulose nanocrystal may have a diameter of 2 nm to 20 nm and a length of 100 nm to 600 nm, however, the present invention is not limited thereto.

According to one aspect of the present invention, the water may be ultrapure water or distilled water, however, the present invention is not limited thereto.

According to one aspect of the present invention, the antimicrobial composition may include 40 to 60 parts by weight of sea marine stone, 1 to 10 parts by weight of metal powder, and 40 to 60 parts by weight of nanocellulose based on 100 parts by weight of the water.

The antimicrobial composition is mixed in the above contents, so that antimicrobial and deodorizing effects can be excellent when the antimicrobial composition is coated on a base material, and particularly, the phenomenon of attracting bugs and the like can be suppressed.

According to one aspect of the present invention, the pest-proof and antimicrobial composition may further include picaridin.

The picaridin is also called icaridin and refers to an environmentally friendly raw material certified by the World Health Organization (WHO).

The pest-proof and antimicrobial composition further includes picaridin, so that antimicrobial and deodorizing effects can be excellent and particularly, the phenomenon of attracting bugs and the like can be suppressed.

According to one aspect of the present invention, the pest-proof and antimicrobial composition may further include 0.01 to 10 parts by weight of picaridin based on 100 parts by weight of the water, however, the present invention is not limited thereto.

The manufactured pest-proof and antimicrobial composition is not limited to a type of base material when it can be applied thereon, and specifically, may be applied to walls, ceilings, floors, fabrics, lighting devices, and the like.

Particularly, when the pest-proof and antimicrobial composition is applied to a lighting device, bugs and the like that may be attracted by light of the lighting device can be repelled.

The lighting device is not limited to one that can irradiate light to a predetermined area, such as direct lighting that includes a light source to directly irradiate light or indirect lighting that indirectly irradiates light through reflected light from an external light source, and may refer to conventional lighting modules, lighting apparatuses, lighting, and the like. For specific example, lighting apparatuses to which a lighting such as a pest-proof and antimicrobial lighting is applied may be used, wherein the pest-proof and antimicrobial lighting includes any one selected from an LED lighting, a fluorescent lamp, an incandescent lamp, a ceiling light, a downlight, a spotlight, a searchlight, a horizon light, a multi-light pendant, a light stand, a chandelier, a full light, a wall lamp, a kitchen lamp, a living room lamp, a flat edge lamp, a square room lamp, a circular room lamp, a cross-line lamp, an I-line lamp, a square sensor lamp, a circular sensor lamp, a circular ceiling downlight lamp, an oval ceiling downlight lamp, an underground lamp, a parking lot lighting lamp, a fluorescent parallel lamp (FPL), a parallel lamp (PL) fixture, a short type ball bulb, a long type ball bulb, a studio button lamp, a square button lamp, a cross lamp, a long stand lamp, a mood lamp, a factory lamp, a desk stand lamp, a slim surface lighting, a bathroom lamp, a sink lamp, a shoe rack lamp a flat edge future, a flat slim bezel edge, a square floodlight, a traffic light, a sensor lamp, a ceiling downlight lamp, a recessed floodlight, a signboard lamp, a flat panel lighting, a surface lighting, a ship floodlight, a landscape lighting, a factory floodlight, a tunnel lamp, a waterproof surface lighting flat lamp, an emergency downlight, a gas station **LED** lighting, an emergency guide lamp, a light for high-temperature and high-humidity environments, an emergency flat lamp, a sports lighting, a floodlight and landscape lamp, a parking lot lamp, a moisture-proof lamp, a parking lamp, a security street lamp, a crosswalk floodlight, a street and garden lamp, a security lamp, a tree lamp, and a car headlight. Specifically, LED lighting apparatuses may be used, but the present invention is not limited thereto.

According to one aspect of the present invention, the LED lighting apparatus may include any one selected from a bulb type, a bar type, a street light type, and a flood light type.

According to one aspect of the present invention, an antimicrobial and pest-proof lighting obtained by coating the antimicrobial and pest-proof composition on an LED lighting may be provided. The antimicrobial and pest-proof composition is applied to the LED lighting, so that the antimicrobial and deodorizing effects can be implemented and the phenomenon of attracting bugs to light can be suppressed.

According to one aspect of the present invention, the LED lighting may have a color temperature range of 2,000 K to 6,000 K, and specifically 2,000 K to 3,000 K. When the color temperature range of the LED lighting is 3000 K or less, yellow light may be emitted, and when it is above 3000 K, white light may be emitted.

When the color temperature range is satisfied between 2,000 K and 3,000 K, the number of bugs attracted to the light emitted from the LED may be further reduced.

According to one aspect of the present invention, the LED lighting is used to satisfy the color temperature range and have a wavelength band of 510 nm to 700 nm, so that the number of bugs attracted to the light may be significantly reduced.

FIG. 4 is a table showing wavelength bands of the pest-proof and antimicrobial lighting, wavelength bands of the general commercial LED lighting, and removal rates of blue light.

The conventional LED lighting is used to have a wavelength band of 300 nm to 700 nm. In the present invention, the LED lighting may be blocked in a wavelength band of 300 nm to 500 nm to effectively suppress the pest attraction, and specifically, may have a wavelength band of 510 nm to 700 nm.

When the LED lighting having the wavelength band of 510 nm to 700 nm, the bug repelling effect may be excellent. Particularly, when the pest-proof and antimicrobial composition is applied onto the LED lighting having the wavelength band of 510 nm to 700 nm, the antimicrobial, deodorizing and pest-proof effects can be further improved.

Specifically, a manufacturing process of the LED may proceed sequentially through an Epitaxial (Epi) wafer manufacturing, chip production, packaging, module and the like. The Epi wafer may be an SiC substrate, however, the present invention is not limited thereto.

In addition, another aspect of the manufacturing process of the LED may include a packaging process, and the packaging process may be a process including a step of connecting manufactured chips and leads and packaging the connected chips and leads to allow light to be emitted to the outside as much as possible; and a module step of using an LED completed in the packaging to attaching the LED onto a predetermined frame. However, the present invention is not limited thereto.

In addition, according to the present invention, in order to implement a blue light blocked LED having a wavelength of 300 nm to 500 nm, the LED may be used as an excitation light source, and a fluorescent material for exhibiting a yellow color (510 nm to 700 nm) of yttrium aluminum garnet (YAG) may be used to the excitation light source. However, this is merely an example, and the present invention is not limited thereto when it can remove a wavelength band of 300 nm to 500 nm.

Particularly, the antimicrobial composition according to one aspect of the present invention is applied to the LED lamp, so that a photocatalytic effect may be generated in addition to the pest-proof effect. The photocatalytic effect refers to an effect of reducing atmospheric pollutants such as NOx and SOx into water and carbon dioxide, and the present invention is not limited to the general photocatalytic effect.

Hereinafter, the present invention will be described in more detail based on Examples and Comparative Examples. However, the following Examples and Comparative Examples are only examples for describing the present invention in more detail, and the present invention is not limited by the following Examples and Comparative Examples.

Deodorization characteristic test

After construction in living rooms, rooms, and bathrooms of a newly built apartment complex, the air purification ability is measured based on the detection tube method (Gastech product GSP-200 detection tube 91PL & 122P).

In addition, changes in emission amounts of total volatile organic compounds (TVOC) and formaldehyde (HCHO) from 3.5T of domestically produced medium-density fiberboard (MDF) and domestically produced high-density fiberboard (HDF) commonly used in construction are measured on days 1, 7, 14 and 21.

Removal efficiency of blue light

Spectra according to wavelengths of the pest-proof and antimicrobial lighting of the present invention and the general LED lighting are shown in Table 1 below.

[Table 1]

| MTC Pest-proof LED 3,000 K | | | General LED lighting 3,000 K | | | Blue light removal rate | |
|---|---|---|---|---|---|---|---|
| Wavelength(nm) | Spectrum | AD Value | Wavelength(nm) | Spectrum | AD Value | AD Value deviation | |
| 380 | 0.0015 | 68 | 380 | 0.0026 | 71 | 3 | 0.05 |
| 385 | 0.0012 | 70 | 385 | 0.0046 | 115 | 45 | 0.65 |
| 390 | 0.0009 | 70 | 390 | 0.0145 | 326 | 256 | 3.68 |
| 395 | 0.001 | 75 | 395 | 0.0255 | 637 | 563 | 7.55 |
| 400 | 0.0012 | 83 | 400 | 0.0207 | 602 | 519 | 6.22 |
| 405 | 0.0021 | 112 | 405 | 0.0277 | 872 | 760 | 6.81 |
| 410 | 0.0041 | 180 | 410 | 0.0577 | 1960 | 1780 | 9.88 |
| 415 | 0.0079 | 317 | 415 | 0.0882 | 3250 | 2933 | 9.26 |
| 420 | 0.0143 | 569 | 420 | 0.0931 | 3700 | 3131 | 5.51 |
| 425 | 0.025 | 970 | 425 | 0.1061 | 4281 | 3311 | 3.41 |
| 430 | 0.0428 | 1616 | 430 | 0.1419 | 5678 | 4062 | 2.51 |
| 435 | 0.0741 | 2634 | 435 | 0.1788 | 6841 | 4207 | 1.6 |
| 440 | 0.1296 | 4776 | 440 | 0.2061 | 8291 | 3516 | 0.74 |
| 445 | 0.2304 | 9017 | 445 | 0.2672 | 11338 | 2321 | 0.26 |
| 450 | 0.39 | 15709 | 450 | 0.3864 | 17002 | 1293 | 0.08 |

Experiment on pest attraction prevention

An antimicrobial composition is applied to 1 m X 1 m of a white cloth and then dried to produce a coated cloth. the number of attracted bugs is counted by spreading the coated cloth on a wall of a building outdoors and shining the cloth using a lamp.

Example 1

A mixed composition is prepared by mixing 51.17 parts by weight of marine sea stone, 3.93 parts by weight of mixed metal powder of silver, titanium, copper and zinc, and 51.98 parts by weight of nanocellulose based on 100 parts by weight of water. The mixed composition is wet ground using a Rotate Mill (RRG-100) device, and the raw material is milled for 50 minutes to have an average particle size of 25 nm, thereby preparing the antimicrobial composition. A deodorizing characteristic test is performed on the prepared antibacterial composition, and the results are shown in Tables 2 to 3. In addition, an experiment of pest attraction prevention is performed on the prepared antimicrobial composition and resulted in Table 4.

Example 2

A mixed composition is prepared by mixing 51.17 parts by weight of sea marine stone, 3.93 parts by weight of mixed metal powder of silver, titanium, copper and zinc, 51.98 parts by weight of nanocellulose, and 1.23 parts by weight of picaridin based on 100 parts by weight of water. The mixed composition is wet ground using a Rotate Mill (RRG-100) device, and the raw material is milled for 50 minutes to have an average particle size of 25 nm, thereby preparing the antimicrobial composition. An experiment of pest attraction prevention is performed on the prepared antimicrobial composition and resulted in Table 4.

[Table 2]

| Organic compound | Concentration before construction ($\mu g/m^3$) | Concentration after construction ($\mu g/m^3$) | Removal rate |
|---|---|---|---|
| formaldehyde | 100 | 26 | 74% |
| toluene | 1,300 | 260 | 80% |
| xylene | 4,250 | 858 | 80% |
| ethylbenzene | 1,430 | 286 | 80% |

[Table 3]

| | TVOC ($mg/m^2$ 2h) | | HCHO($mg/m^2$ 2h) | |
|---|---|---|---|---|
| | Uncoated specimen | Coated specimen | Uncoated specimen | Coated specimen |
| Day 1 | 0.118 | 0.051 | 0.060 | 0.003 |
| Day 7 | 0.132 | 0.023 | 0.046 | 0.004 |
| Day 14 | 0.120 | 0.021 | 0.048 | 0.012 |
| Day 21 | 0.109 | 0.016 | 0.061 | 0.008 |

[Table 4]

| Location: Jigok-myeon, Seosan-si, South Chungcheong Province, Korea | | | |
|---|---|---|---|
| Item | Number of bugs | Expected effect | Test conditions |
| Cloth not coated with antimicrobial composition | About 200 or more | None | Time: 21:00-22:00 |
| Example 1 | About 100 | Good | Temperature: 27°C |
| Example 2 | About 30 | Very good | Humidity: 66% Wind: 3 m/s |

Example 3

The antimicrobial composition of Example 2 is applied to a surface of an LED lighting having a color temperature range of 3000 K and a wavelength band of 510 nm to 700 nm, and dried to manufacture the pest-proof antimicrobial lighting. Then, the pest-proof and antimicrobial lighting is installed in each location, the number of bugs flocking to the lighting is measured and compared to that of the general lighting, and the results are listed in Table 5 below. In this regard, the average number of bugs is described in Table 6.

[Table 5]

| Location: Jigok-myeon, Seosan-si, South Chungcheong Province, Korea | | | | |
|---|---|---|---|---|
| Item | Pest-proof coating + LED | Number of bugs | Expected effect | Test conditions |
| General lighting | Commercially available lighting | About 170 or more | None | Time: 19:00-20:30 |
| Invention (pest-proof and antimicrobial lighting) | Pest-proof LED + antimicrobial coating lighting | 3-7 | Very good | Temperature: 28°C Humidity: 66% Wind: 3 m/s |

EP 4 696 135 A1

(continued)

| Location: Daesan-myeon, Seosan-si, South Chungcheong Province, Korea | | | | |
|---|---|---|---|---|
| Item | Pest-proof coating + LED | Number of bugs | Expected effect | Test conditions |
| General lighting | Commercially available lighting | About 190 or more | None | Time: 19:00-20:30 |
| Invention (pest-proof and antimicrobial lighting) | Pest-proof LED + antimicrobial coating lighting | 3-6 | Very good | Temperature: 27°C Humidity: 7% Wind: 5 m/s |
| Location: Seongyeon-myeon, Seosan-si, South Chungcheong Province, Korea | | | | |
| Item | Pest-proof coating + LED | Number of bugs | Expected effect | Test conditions |
| General lighting | Commercially available lighting | About 150 or more | None | Time: 19:00-20:30 |
| Invention (pest-proof and antimicrobial lighting) | Pest-proof LED + antimicrobial coating lighting | 4-8 | Very good | Temperature: 27°C Humidity: 73% Wind: 4 m/s |
| Location: Munsan-eup, Paju-si, Gyeonggi-do, Korea | | | | |
| Item | Pest-proof coating + LED | Number of bugs | Expected effect | Test conditions |
| General lighting | Commercially available lighting | About 210 or more | None | Time: 19:00-20:30 |
| Invention (pest-proof and antimicrobial lighting) | Pest-proof LED + antimicrobial coating lighting | 4-9 | Very good | Temperature: 25°C Humidity: 86% Wind: 3 m/s |
| Location: Paju-eup, Paju-si, Gyeonggi-do, Korea | | | | |
| Item | Pest-proof coating + LED | Number of bugs | Expected effect | Test conditions |
| General lighting | Commercially available lighting | About 220 or more | None | Time: 19:00-20:30 |
| Invention (pest-proof and antimicrobial lighting) | Pest-proof LED + antimicrobial coating lighting | 5-8 | Very good | Temperature: 28°C Humidity: 79% Wind: 5 m/s |
| Location: Papyeong-myeon, Paju-si, Gyeonggi-do, Korea | | | | |
| Item | Pest-proof coating + LED | Number of bugs | Expected effect | Test conditions |
| General lighting | Commercially available lighting | About 370 or more | None | Time: 19:00-20:30 |
| Invention (pest-proof and antimicrobial lighting) | Pest-proof LED + antimicrobial coating lighting | 3-7 | Very good | Temperature: 30°C Humidity: 85% Wind: 3 m/s |
| Location: Jindong-myeon, Paju-si, Gyeonggi-do, Korea | | | | |
| Item | Pest-proof coating + LED | Number of bugs | Expected effect | Test conditions |
| General lighting | Commercially available lighting | About 390 or more | None | Time: 19:00-20:30 |
| Invention (pest-proof and antimicrobial lighting) | Pest-proof LED + antimicrobial coating lighting | 4-8 | Very good | Temperature: 29°C Humidity: 79% Wind: 4 m/s |
| Location: Jinseo-myeon, Paju-si, Gyeonggi-do, Korea | | | | |
| Item | Pest-proof coating + LED | Number of bugs | Expected effect | Test conditions |
| General lighting | Commercially available lighting | About 420 or more | None | Time: 19:00-20:30 |

(continued)

| Location: Jinseo-myeon, Paju-si, Gyeonggi-do, Korea | | | | |
|---|---|---|---|---|
| Item | Pest-proof coating + LED | Number of bugs | Expected effect | Test conditions |
| Invention (pest-proof and anti-microbial light-ing) | Pest-proof LED + antimicrobial coating lighting | 4-9 | Very good | Temperature: 31°C Humidity: 89% Wind: 2.5 m/s |

[Table 6]

| Item | | Average number of bugs | Expected effect of lighting |
|---|---|---|---|
| General lighting | | 265 | None |
| Invention | Pest-proof LED + antimicrobial coating lighting | 3-6 | Very good |

The present invention has been described with reference to the limited embodiments and drawings and the particular details, and it will be understood that the above description has been merely provided for further understanding the present invention, but the present invention is not limited to the embodiments, and those skilled in the art may carry out various changes and modifications from the above-mentioned description.

Accordingly, therefore, the spirit of the present invention will not be determined by the aforementioned embodiments only, and the following claims as well as all modifications or variations belonging to the equivalents of the claims will be within the scope of the invention.

## Claims

1. A pest-proof and antimicrobial composition comprising: metal powder, sea marine stone, nanocellulose, and water, wherein

   the metal powder includes one or more selected from gold, silver, titanium, copper, zinc, vanadium, iron, platinum, nickel, aluminum, magnesium, and calcium powder, and
   the sea marine stone includes 20 to 40 wt% of $SiO_2$, 10 to 25 wt% of $Al_2O_3$, 2 to 10 wt% of $SnO_2$, 2 to 10 wt% of $Fe_2O_3$, 0.1 to 2 wt% of $MgO$, 1 to 2 wt% of $K_2O$, 0.3 to 2 wt% of $Na_2O$, 20 to 40 wt% of $TiO_2$, 0.3 to 3 wt% of $ZnO$, 0.01 to 0.05 wt% of $MnO$, and 0.0005 to 0.005 wt% of $P_2O_5$.

2. The pest-proof and antimicrobial composition of claim 1, further comprising:
   40 to 60 parts by weight of sea marine stone, 1 to 10 parts by weight of metal powder, and 40 to 60 parts by weight of nanocellulose based on 100 parts by weight of the water.

3. The pest-proof and antimicrobial composition of claim 1, wherein the water is ultrapure or distilled water.

4. The pest-proof and antimicrobial composition of claim 1, further comprising: picaridin.

5. The pest-proof and antimicrobial composition of claim 4, further comprising: 0.01 to 10 parts by weight of picaridin based on 100 parts by weight of the water.

6. The pest-proof and antimicrobial composition of claim 1, wherein the metal powder has an average particle diameter of 1 nm to 200 nm.

7. The pest-proof and antimicrobial composition of claim 1, wherein the marine stone has a powder form and has an average particle size of 1 nm to 200 nm.

8. A pest-proof and antimicrobial lighting comprising: an LED lamp coated with a pest-proof and antimicrobial composition of any one of claims 1 to 7.

9. The pest-proof and antimicrobial lighting of claim 8, wherein the LED lamp has a color temperature range of 2,000 K to 6,000 K.

10. The pest-proof and antimicrobial lighting of claim 9, wherein the LED lamp has a color temperature range of 2,000 K to 3,000 K.

11. The pest-proof and antimicrobial lighting of claim 9, wherein the LED lamp emits a light wavelength obtained by removing a wavelength band of 300 nm to 500 nm.

12. The pest-proof and antimicrobial lighting of claim 11, wherein the LED lamp emits the light wavelength of 510 nm to 700 nm.

13. The pest-proof and antimicrobial lighting of claim 9, wherein the LED lamp includes any one selected from a bulb type, a street lamp, a solar street lamp, floodlight, a solar floodlight, a ceiling light, a downlight, a searchlight, a horizon light, a multi-light pendant, a stand light, a full light, a wall lamp, a kitchen lamp, a living room lamp, a flat edge lamp, a square light, a circular room lamp, a cross-line lamp, an I-line lamp, a square sensor lamp, a circular sensor lamp, a circular ceiling downlight, an oval ceiling downlight, an underground lamp, a parking lot lighting lamp, a compatible LED lamp, a PL fixture, a short type ball bulb, a long type ball bulb, a studio button lamp, a square button lamp, a cross lamp, a long stand lamp, a mood lamp, a factory lamp, a desk stand lamp, a slim surface lighting, a bathroom lamp, a sink lamp, a shoe rack lamp a flat slim bezel edge, a square floodlight, a traffic light, a sensor lamp, a ceiling downlight lamp, a recessed floodlight, a signboard lamp, a flat panel lighting, a surface lighting, a ship floodlight, a landscape lighting, a factory floodlight, a tunnel lamp, a waterproof surface lighting flat lamp, an emergency downlight, a gas station LED lighting, an emergency guide lamp, a light for high-temperature and high-humidity environments, an emergency flat lamp, a sports lighting, a floodlight and landscape lamp, a parking lot lamp, a moisture-proof lamp, a parking lamp, a security street lamp, a crosswalk floodlight, a street and garden lamp, a security lamp, a tree light and a car headlight.

FIG. 1

FIG. 2

FIG. 3

G4B(www.g4b.go.kr) Authenticity verification code : 7Z0Uo8Nl8fl=

# TESTING CERTIFICATE

| | |
|---|---|
| Certificate No : ESTLPE2301-024 | The day of issue : 2023.01.27 |

**1. Cient**
  · Name : MTC CO., Ltd.
  · Address : 5, Tongyeong-ro, Gwacheon-si, Gyeonggi-do, Republic of Korea

**2. Use of Report :** For quality control

**3. Test Sample :** Anti-pest LED lighting / MTC-AB-10W

**4. Test Number :** ESTL-23-00059

**5. Date of Test :** 25 January, 2023

**6. Test Method used :** Provided by the client

**7. Test Site :** 18, Sambaek-ro 785beon-gil, Geunsam-ri, Beagam-myeon, Cheoin-gu, Yongin-Si, Gyeonggi-do, Republic of Korea

**8. Testing Environment :** Temperature : (25 ± 5) ℃, Humidity : (50 ± 20) % R.H.

**9. Test Results :** Refer to "Test Results"

Tested by : Jisu Lee

Approved by : Donghyun Youn

※ This test result is limited to the samples and samples provided by the clinet.

※ Do not use any other purpose than report purposes.

※ This test report is not related to KOLAS accreditation.

2023. 01. 27

**ESTECH Co., Ltd.**

(Signature)

18, Sambaek-ro 785beongil, Geunsam-ri, Beagam-myeon, Cheoin-gu, Yongin-Si, Gyeonggi-do, Republic of korea

Tel : 031)526-0075 / Fax : 031)526-0076

| | | |
|---|---|---|
| EST-QP17-L-I01-F03 (2022.12.21) | ESTECH Co., Ltd. | 1 / 3 |

## INTERNATIONAL SEARCH REPORT

| International application No. |
|---|
| **PCT/KR2023/007745** |

| A. | CLASSIFICATION OF SUBJECT MATTER |
|---|---|

**A01M 29/10**(2011.01)i; **A01N 43/40**(2006.01)i; **A01N 59/00**(2006.01)i; **C09D 5/14**(2006.01)i; **C09D 7/61**(2018.01)i; **C09D 7/63**(2018.01)i; **C09D 7/45**(2018.01)i; **A01M 29/12**(2011.01)i

According to International Patent Classification (IPC) or to both national classification and IPC

| B. | FIELDS SEARCHED |
|---|---|

Minimum documentation searched (classification system followed by classification symbols)

A01M 29/10(2011.01); A01M 1/04(2006.01); A01M 1/22(2006.01); A01N 65/22(2009.01); A01N 65/36(2009.01); A61L 9/01(2006.01); B01J 13/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 항균성 조성물(antibacterial composition), 해충(pest), LED 조명(LED lamp), 나노셀룰로오스(nanocellulose), 코팅(coating)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | SOLHI, Laleh et al. ACS Publications. Understanding Nanocellulose–Water Interactions: Turning a Detriment into an Asset. [online]. 01 February 2023. [Retrieved on 26 December 2023]. Retrieved from <URL: https://pubs.acs.org/doi/epdf/10.1021/acs.chemrev.2c00611>. See pages 1958-1963. | 1-13 |
| A | JP 2010-273698 A (JGC CATALYSTS & CHEMICALS LTD.) 09 December 2010 (2010-12-09) See paragraph [0003] and claims 1 and 4. | 1-13 |
| A | KR 10-2007-0118333 A (CHANG, Soon Cho) 17 December 2007 (2007-12-17) See paragraph [0013]. | 1-13 |
| A | KR 10-2022-0070308 A (GLOBAL BIOLIFE INC.) 30 May 2022 (2022-05-30) See claim 1. | 1-13 |

| ✓ Further documents are listed in the continuation of Box C. | ✓ See patent family annex. |
|---|---|

| \* Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 January 2024** | **03 January 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/007745** |

| C. | DOCUMENTS CONSIDERED TO BE RELEVANT | |
|---|---|---|
| Category* | Citation of document, with indication, where appropriate, of the relevant passages | Relevant to claim No. |
| A | 강수아 등. 유-무기 하이브리드 형 Abaca 셀룰로오스/이산화 티타늄 복합체의 제조 및 이의 광촉매적 특성. [online]. 11 January 2023 (KANG, Su-A et al. Preparation and Photocatalyric Properties of Organic-Inorganic Hybrid Abaca Cellulose@Titanium Dioxide Composite). [Retrieved on 26 December 2023]. Retrieved from <URL: chrome-extension://efaidnbmnnnibpcajpcglclefindmkaj/https://www.cheric.org/PDF/KEHH/KH34/KH34-1-0057.pdf>. See pages 57-60. | 1-13 |

Form PCT/ISA/210 (second sheet) (July 2022)

## INTERNATIONAL SEARCH REPORT
### Information on patent family members

International application No.

**PCT/KR2023/007745**

| Patent document cited in search report | | | Publication date (day/month/year) | Patent family member(s) | | | Publication date (day/month/year) |
|---|---|---|---|---|---|---|---|
| JP | 2010-273698 | A | 09 December 2010 | JP | 5669367 | B2 | 12 February 2015 |
| KR | 10-2007-0118333 | A | 17 December 2007 | KR | 10-0909228 | B1 | 28 July 2009 |
| KR | 10-2022-0070308 | A | 30 May 2022 | AU | 2020-358028 | A1 | 21 April 2022 |
| | | | | AU | 2020-358028 | B2 | 25 May 2023 |
| | | | | BR | 112022006462 | A2 | 28 June 2022 |
| | | | | BR | 112022006462 | B1 | 28 March 2023 |
| | | | | CA | 3156804 | A1 | 08 April 2021 |
| | | | | CA | 3156804 | C | 23 May 2023 |
| | | | | CN | 114929783 | A | 19 August 2022 |
| | | | | CN | 114929783 | B | 23 May 2023 |
| | | | | EP | 4038129 | A1 | 10 August 2022 |
| | | | | EP | 4038129 | A4 | 04 October 2023 |
| | | | | JP | 2022-550904 | A | 05 December 2022 |
| | | | | KR | 10-2480695 | B1 | 22 December 2022 |
| | | | | US | 10966424 | B1 | 06 April 2021 |
| | | | | US | 2021-0100243 | A1 | 08 April 2021 |
| | | | | WO | 2021-067780 | A1 | 08 April 2021 |

Form PCT/ISA/210 (patent family annex) (July 2022)